# EUROPEAN PATENT SPECIFICATION

(11) **EP 0 809 050 B1**
(45) Date of publication and mention of the grant of the patent: **13.08.2003**
(21) Application number: 97108160.9
(22) Date of filing: 20.05.1997
(51) Int. Cl.: F16J 9/22

(54) **Method of making a piston for an internal combustion engine**
Verfahren zur Herstellung einen Kolben für eine Brennkraftmaschine
Procédé de fabrication d'un piston pour un moteur à combustion interne

(30) Priority: 20.05.1996 JP 12438696; 05.06.1996 JP 14270496
(43) Date of publication of application: 26.11.1997
(73) Proprietor: YAMAHA HATSUDOKI KABUSHIKI KAISHA, Iwata-shi Shizuoka-ken, 438 (JP)
(72) Inventor: Kurita, Hirotaka, Iwata-shi, Shizuoka-ken 438 (JP); Koike, Toshikatsu, Iwata-shi, Shizuoka-ken 438 (JP); Yamagata, Hiroshi, Iwata-shi, Shizuoka-ken 438 (JP)
(74) Representative: Grünecker, Kinkeldey, Stockmair & Schwanhäusser Anwaltssozietät

(56) References cited:
- EP-A- 0 035 348
- EP-A- 0 153 473
- CH-A- 499 719
- DE-A- 3 719 121
- DE-A- 3 822 031
- FR-A- 1 226 350
- JP-A- 1 180 927
- JP-A- 63 132 743
- US-A- 2 707 136
- US-A- 4 364 159
- US-A- 4 434 014
- US-A- 4 889 557

## Description

This invention relates to a method of making a piston for internal combustion engines according to the preamble of claim 1. Such a method is known from JP 01 180 927 A, JP 63 132 743 A or FR 1 226 350.

An internal combustion engine piston in general is required to meet the following requirements.

First, the piston is light-weight. In other words, the piston (i) has a thin-walled form (using a material of a high fatigue strength at high temperatures even with a thin wall and of a good forming property even with a thin wall), and (ii) is made of a material of a small density (a light material).

Second, the height of the top land, the portion above the piston ring, of the piston head is small. This is required for increasing compression ratio resulting in a higher performance and for smaller crevice volume resulting in reduced amount of unburned gas as an effective measure for reducing exhaust emissions. In this case, it is necessary that (i) the underside of the piston ring is not thermally fused to the piston even with a reduced top land thickness (a material has to be used that maintains hardness even at a temperature of about 350 degrees C on the upper side of the piston), and (ii) the corner of the top land should not yield or deform (a material has to be used that stands a temperature of about 350 degrees C on the upper side of the piston).

Third; permanent deformation is small (rigidity is high). In other words, the head portion is made less likely to bend (the head portion is made thick-walled, and a material is used that retains a high Young's modulus even at a temperature of about 350 degrees C on the piston top surface).

As described above, the piston for internal combustion engines is required to have high fatigue strength, proof strength, and hardness at high temperatures and to be made of a material that enables a thin-walled form and has good forming property.

However, it is difficult to find a single material that can meet such requirements as described above. Therefore, it is conceivable for the internal combustion engine piston to use a material of a high strength at high temperatures for the head portion and use a material of a different property from that of the head portion for the skirt portion. According to such a concept, the following three constitutions have been proposed.

The first of them is to constitute the head and skirt portions with cladding materials of different physical properties (aluminium alloy and a compound layer made of aluminium alloy mixed with whiskers, short fibers, etc. (FRM)). Both materials are joined together by forging to form a single piston for internal combustion engines (Refer to the Japanese Laid-open Patent Application Sho-63-132743).

The second is to make a two-layer body by powder-forming quenched powder aluminium matrices (powder metal) of a common composition with different ceramic powder mixing ratios. The two-layer body is then heat-pressed to form a pre-form. The pre-form is then heat-forged to form a piston for internal combustion engines, with the head portion containing a higher ratio of ceramic powder and the skirt portion containing a lower ratio of ceramic powder (Refer to the Japanese Laid-open Patent Application Hei-1-180927).

The third is a piston for internal combustion engines, in which the head portion is made of forged powder metal or FRM, the skirt portion is made of an aluminium alloy casting, and both portions are welded together (Refer to the Japanese Laid-open Patent Application Hei-2-107749).

A piston for an internal combustion engine as defined in the preamble of claim 1 is known from EP-A2-0 035 348. The piston known from this prior art document comprises a head portion made of compacted and sintered aluminum alloy powder which is shaped under heat and pressure and which is bonded to the skirt portion under heat and pressure.

EP-A2-0 153 473 discloses a cast piston made of aluminum. According to this prior art document, the aluminum alloy may contain silicon. According to this prior art document compressive strain induced by forging may cause the material forming the piston to crack.

With the conventional piston of the first embodiment described above, sufficient joining strength cannot be attained on the joining interface, especially in its center, between the head and skirt portions. The cause is that a sufficient relative slip does not occur on the joining interface between the head and skirt portions at the time of forging, and therefore an oxide film on the joining interface cannot be destroyed and removed for providing a sufficient joining strength. Namely, with the conventional piston of the first embodiment, a relative slip required for the joining action is less likely to occur on the joining interface, especially in its center, during forging. If the joining strength is to be increased, an additional man-hours therefor will be required. If the FRM is used, stress concentrations occur on interfaces between the matrix and the reinforcing materials of whiskers or short fibers, and therefore a sufficient fatigue strength cannot be provided at high temperatures. When the cladding materials are used for forging. the processes become complicated and, as a result, the manufacturing cost increases. Another problem with the cladding material is that the material cannot be used locally, for example only in part of the head portion, in the ring groove portion where the piston ring is fit, or in the upper edge portion.

With the conventional piston of the second embodiment described above. sufficient joining strength cannot be provided on the joining interface, especially in its center, between the head and skirt portions. The cause is that, like the first conventional embodiment, a sufficient relative slip is less likely to occur on the joining interface between the head and skirt portions at the time of forging. If the joining strength is to be increased, an additional man-hours therefor will be required. Also, since the head and skirt portions are made of the same matrix. the forming property of the thin-walled portion required of the skirt portion and the heat resistance required of the head portion cannot be met simultaneously. That is to say, if the deformation resistance at high temperatures is reduced to secure the forming property, the heat resistance decreases, which causes the top surface edge of the head portion to yield or deform. Furthermore, filling ratio of the pre-form as a forging material is low, so parting agent and lubricant used during hot forging enter the material, and good forming cannot be provided.

With the conventional piston of the third embodiment described above, when the head portion made of metallic power and the skirt portion are welded together, a brittle alloy layer is produced in the welded portion of the powder metal and the joining strength is low. In the welded portion of the powder metal, basic characteristics (fatigue strength, proof strength, and hardness) are lost. When the joining is made by friction welding, burrs are produced in the welded portion. The burrs can cause stress concentration and must be removed. However, the removal is difficult because, the inside of the piston has an irregular shape because of the pin boss portions. When the head portion is made of FRM, stress concentrations occur on the interface between the reinforcing materials, such as whiskers and short fibers, and the matrix. As a result, sufficient fatigue strength is not provided at high temperatures.

In the piston known from EP-A2-0 035 348 the interface between the head portion and the skirt portion is enlarged. However, the joining strength at the interface between the head portion and the skirt portion may not be sufficient in particular if one of the portions has formed thereon an oxide layer which inhibits an intimate joint when bonding together the two portions under heat and pressure.

The invention has been made in view of the disadvantages of the prior art described above with an object to provides a method of making an improved piston for internal combustion engines.

As a solution to this object, the present invention provides a method as defined in claim 1. Preferred embodiments of the inventive method are set out in the dependent claims.

As a result of the inventive method, elongation or slip occurs in the joining interface between the head and the skirt portion when they are forge joined together. Thus, surface films on both materials are broken and both material textures go into each other or mix with each other so as to be firmly joined together.

Since fiber flows are formed on the interface between both materials joining strength in the vicinity of the interface is significantly increased. Therefore, sufficient joining strength is provided simultaneously with the forming of the piston by forging as claimed by claim 26. Thus, productivity is increased without increasing the number of production steps or the time required for making a piston for increasing the joining strength. Productivity is also improved without increasing the time required, e.g. the number of man hours and the alloy layer for the head portion of which heat resistance and rigidity are equipped are respectively constituted with different materials.

At the same time, the top length portion of the piston can be made thin-walled and light-weight Thus, the output can be increased by the increase in the compression ratio within the combustion chamber. Unbumed HC gas emissions are reduced by the decrease in crevice volume to serve as emission measures. Furthermore, the weight of the bearing area can be reduced and its durability be improved due to the reduction of inertial forces. Furthermore, by these measures engine vibrations can be reduced.

The invention will now be described by means of explanatory embodiments comprising further advantageous features. The drawings show:
FIG. 1 is a rough explanatory view of a two-cycle engine in which the internal combustion engine piston of the invention is used.
FIG. 2 is a rough explanatory view of a four-cycle engine in which the internal combustion engine piston of the invention is used.
FIG. 3 is a cross-sectional view of an example of an internal combustion engine piston of the invention, with the left half showing a front view of a piston boss below a piston ring groove and the right half showing a side view of the piston boss.
FIG. 4 is an explana tory drawing to show the manufacturing process sequence for the internal combustion engine piston of FIG. 3.
FIG. 5 is for detailed explanation of the processes (K) - (N) of FIG. 4.
FIG. 6 is an explanatory drawing showing examples of locations and shapes of the extruded projections on the head portion of the piston manufactured according to the method of the invention.
FIG. 7 is an explanatory drawing of distribution of the heat resistant alloy in the piston of the invention.
FIG. 8 is a cross-sectional view to show another method of manufacturing the piston of the invention.
FIG. 9 is a cross-sectional view to show still another method of manufacturing the piston of the invention.
FIG. 10 is a cross-sectional view to show still another method of manufacturing the piston of the invention.
FIG. 11 is a cross-sectional view to show still another method of manufacturing the piston of the invention.
FIG. 12 is a view of interface texture drawn in reference to a microscopic photograph of the joining interface of the piston of the invention.
FIG. 13 is a further detailed explanation of the process (K) - (N) of FIG. 4.

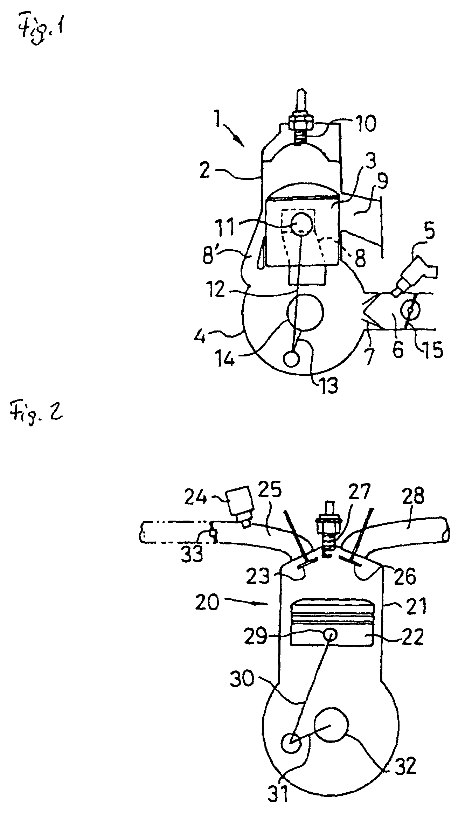

FIG. 1 is a rough explanatory view of a two-cycle engine in which the internal combustion engine piston of the invention is used.

The constitution and operation of the two-cycle engine 1 are as follows. When a piston 3 moves up from the bottom dead center within a cylinder 2, a negative pressure is produced within a crankcase 4. Fuel from an injector 5 and air from an intake passage G form a mixture which is drawn through a reed valve 7 into the crankcase 4 and at the same time, a main scavenging port 8 and a sub-scavenging port 8 are covered with the piston 3. Next, an exhaust port 9 is covered with the piston 3 and the mixture in the cylinder 2 is compressed. When the mixture is sufficiently compressed, a spark is thrown off an ignition plug 10, the mixture burns and produces pressure to push down the piston 3 within the cylinder. When the piston 3 moves down to some extent, the exhaust port 9 is uncovered and burned gas begins to be discharged. Then the scavenging ports 8 and 8' are uncovered to introduce fresh mixture from the crankcase 4 into the cylinder 2. The burned gas is further discharged by the introduced fresh mixture. The two-cycle engine 1 operating in the principle described above completes one combustion cycle as the piston 3 completes one reciprocation and a crankshaft 14 makes one turn in cooperation with a piston pin 11, a connecting rod 12, and a crank arm 13. The rotation of the crankshaft 14, of a motorcycle for example, is transmitted through the chain to the rear wheel. By the way, the amount of the mixture is increased or decreased by adjusting the opening of a throttle valve 15 interposed in the intake passage 6.

FIG. 2 is a rough explanatory view of a four-cycle engine in which the internal combustion engine piston of the invention is used.

The constitution and operation of the four-cycle engine 20 are as follows. When a piston 22 moves down from the top dead center within a cylinder 21, a negative pressure is produced in the cylinder 21. Here, an intake valve 23 opens to draw a mixture of fuel from an injector 24 and air coming through an intake passage 25 into the cylinder 21. Next, when the piston 22 moves up from the bottom dead center, the intake and exhaust valves 23 and 26 are both closed and the mixture drawn into the cylinder 21 is compressed.

Next. when the mixture is compressed, a spark is thrown off an ignition plug 27 to combust the mixture. The combustion causes the gas in the cylinder 21 to expand. The expansion pressure pushes down the piston 22. When the piston 22 is pushed down sufficiently, the exhaust valve 26 opens so that the combusted gas is discharged through an exhaust passage 28 as the piston 22 moves up.

The four-cycle engine 20 operating in the principle described above completes one combustion cycle as the piston 22 completes two reciprocations and a crankshaft 32 makes two turns in cooperation with a piston pin 29, a connecting rod 30, and a crank arm 31. The rotation of the crankshaft 32, for example of a motorcycle, is transmitted through the chain to the rear wheel. By the way, the amount of the mixture is increased or decreased by adjusting the opening of a throttle valve 33 interposed in the intake passage 25.

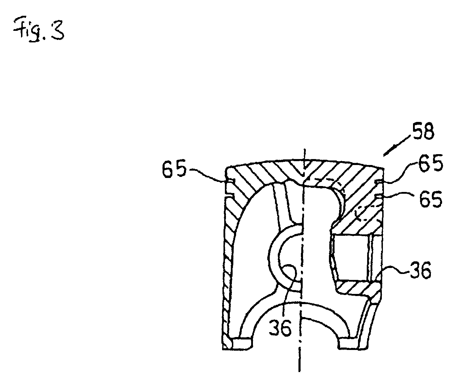

FIG. 3 is a cross-sectional view of an example of an internal combustion engine piston 58 of the invention, with the left half showing a front view of a piston boss 36 below a piston ring groove 65 and the right half showing a side view of the piston boss 36. As shown, piston pin supporting strength is increased by increasing the piston wall thickness on the piston boss 36 side. As seen from the left half of the drawing, the skirt portion (piston side portion) continued from the head portion to constitute the piston top surface is gradually thinned downward.

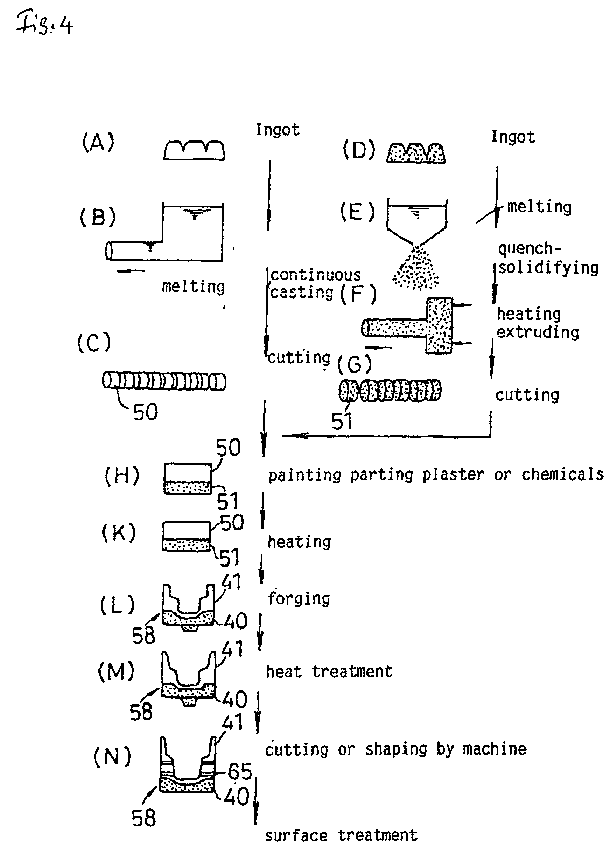

FIG. 4 is an explanatory drawing to show the manufacturing process sequence for the internal combustion engine piston of FIG. 3. An example of the manufacturing method for the internal combustion engine piston of the invention will be described in reference to the drawings.

First in the process (A), an alloy ingot for the skirt portion comprising aluminium (Al), silicon (Si), copper (Cu), and magnesium (Mg) is prepared. Here. the silicon is added for increasing resistance to wear and seizure required of the sliding surface of the piston skirt portion by precipitating hard initial or eutectic crystals in the metallic composition. The copper and magnesium are added for increasing alloy strength at high temperatures. Here, the contents of additives are preferably; 5 - 25 % of silicon. 0.5 - 5 % of copper, and 0.5 - 1.5 % of magnesium. Outside such ranges, intended resistance to wear and seizure, and high temperature strength cannot be provided. By the way, in place of the alloy consisting of aluminium, silicon, copper, and magnesium, those ingredients may be prepared in the form of separate ingots or powder and mixed and melted together.

Next in the process (B). the ingot is melted and a block for the skirt portion is made by continuous casting or extrusion forming. The Al-Si-based alloy block formed in this way is lower in high temperature deformation resistance than the Al-Fe-based alloy block as will be described later (Proof strength of Al-Si-based alloy block at 400 degrees C is about 50 % of that of Al-Fe-based alloy block) and good forming property is provided for the thin wall portion.

Next in the process (C), the block is cut to the size required for the skirt portion to form a piston alloy piece 50.

In the process (D) on the other hand, an alloy ingot for the head portion comprising aluminium (Al), iron (Fe), and silicon (Si) is prepared. Here, the iron is added for increasing fatigue strength at temperatures above 200 degrees C by dispersing metallic composition. The silicon is added for increasing resistance to wear and seizure as described above and further increasing ductility and lowering the melting point. Therefore, too much amount of silicon added causes excessive ductility and a lower strength. Also the lowered melting point results in a lower heat resistance. Therefore, it is necessary to add only minimum amount of silicon necessary for the forming property and wear resistance of the head portion to prevent the strength and heat resistance from lowering. In view of the above points, the additive rate of iron in the head alloy is preferably 5 % or more, and that of silicon is 5 % or less.

Next in the process (E), the ingot is melted, and quench-solidified at a cooling speed of 100 degrees C per second to make Al-Fe-based alloy powder. Next in the process (F). the powder is formed and solidified, and further hot-extruded. A quenched powder aluminium alloy block obtained in this way provides a uniform metallic composition free from parts which could cause stress concentrations while providing a high fatigue strength. This is because, unlike the cooling in the ordinary casting in which coarse iron composition is produced in the alloy and so the strength is low, formation of coarse iron composition is prevented by quench-solidification of the Al-Fe-based alloy powder and further by hot-extrusion forming of the alloy piece. As a result, a uniform metallic composition is provided which is free from coarse iron composition which otherwise could cause stress concentration. and a larger amount of iron may be added to obtain an alloy having a higher fatigue strength. By the way, in place of the ingot comprising aluminium, iron. and silicon, aluminium ingot or powder, iron ingot or powder, and silicon ingot or powder may be separately prepared, mixed, and melted.

Next in the process (G), the block is cut to the size of the head portion to form a powder metal alloy piece (PM alloy piece) 51.

The alloy piece for the skirt portion (alloy piston piece) 50 and the alloy piece for the head portion (PM alloy piece) 51 obtained through the above process are stacked in the process (H) and applied with parting agent. Next in the process (K), the product is heated to improve the forming property. Next in the process (L). the heated two layers of alloy are sandwiched with paired upper and lower dies and forged with a large pressing force to form an integral piston shape. At this time. both alloy pieces are joined as will be described later.

Next in the process (M). the product is heat-treated to increase its strength. Finally in the process (N), the product is finished as piston ring grooves 65 are formed and unnecessary portions are removed by machining. After that, surface treatment such as plating is applied as required on the side surface of the skirt portion for improving sliding characteristic and wear resistance. Thus, the finished piston 58 is constituted by joining two different materials together by forging, with the head portion 40 made of a quenched powder aluminium alloy (PM alloy) and the skirt portion 41 made of an alloy (piston alloy) comprising aluminium, silicon, copper, and magnesium.

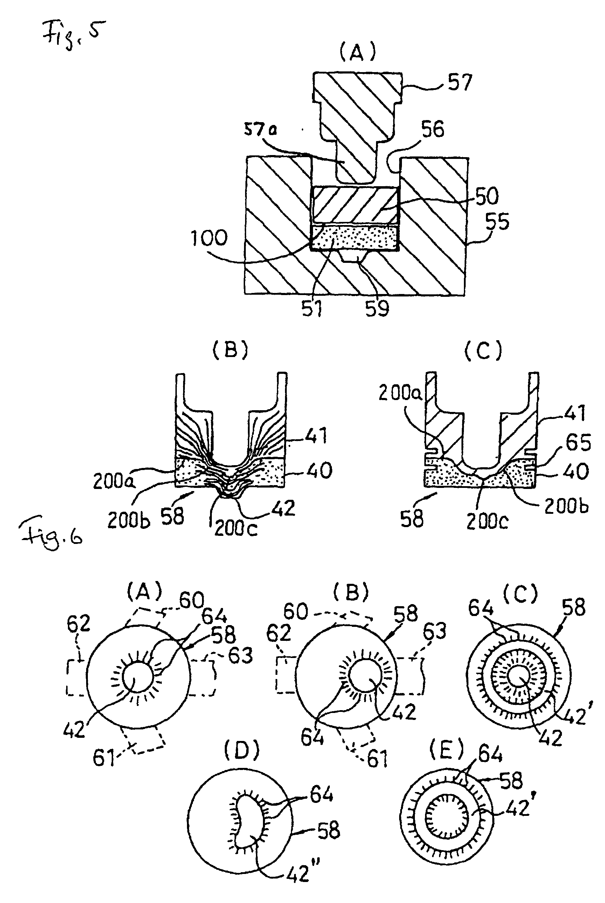

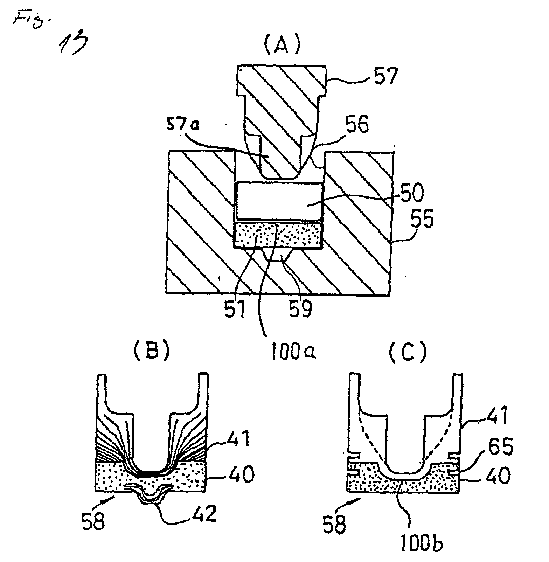

Fig. 5 and 13 are for detailed explanation of the processes (K) - (N) of FIG. 4.

FIG. 5(A) corresponds to the process (K) of FIG. 4. In the process, two stacked alloy layers, with the PM alloy layer 51 for the head portion made of quenched powder aluminium alloy on the under side and the piston alloy layer 50 for the skirt portion made of the alloy comprising aluminium, silicon, copper, and magnesium on the under side, are place in a recess 56 of a preheated lower die 55 and pressed with a preheated upper die or punch 57 to forge-form in a piston shape. In the drawing, the symbol 100a indicates the interface between the two alloy layers before being forged, which is a flat surface in this embodiment.

The two alloy layers are in contact with each other on the interface 100. Parting agent is applied on the cylindrical peripheral surface of the two alloy layers before forging. The shape of the punch 57 is determined to provide required thicknesses to the respective portions of the piston 58. On the other hand, a recess 59 is formed in the bottom center of the recess 56 of the lower die 55 to oppose a projection 57a of the punch 57.

With such a hot forging using the lower (lie 55 and the upper punch 57, forming and joining are made simultaneously to form the piston without deteriorating the characteristics of Al-Fe-based alloy and Al-Si-based alloy and with good dimensional accuracy.

FIG. 5(B) corresponds to the process (L) of FIG. 4. The forged piston 58 has a projection 42 pushed out in the center of the head portion 40 corresponding to the recess 59 formed in the center of the lower die. 55.

In the process (L) of FIG. 4, as the projection 57a of the punch 57 goes into the upper alloy layer 50 for the skirt, portion, periphery of the alloy layer 50 for the skirt portion rises to form the skirt portion. On the other hand, the alloy layer 51 for the head portion is pressed with the projection 57A of the punch 57 through the alloy layer 50 for the skirt portion and enters the recess 59 formed in the lower die 55 to form the projection 42. Along with the entrance into the recess 59, a portion, corresponding to the recess 59, of the interface 100 deforms in a convex shape as seen from the alloy layer 51 side. As the projection 57a of the punch 57 farther goes down below the position of the-pre-forging interface 100, the periphery of the alloy layer 51 for the head portion rises while the thickness of the alloy layer 50 for the skirt portion below the projection 57a reduces and the periphery of the alloy layer 50 for the skirt portion rises farther.

The interface 200 after forging presents a peripheral portion 200a rising higher beyond the pre-forging interface 100, a first dome portion 200b curving downward in a downwardly convex shape to a position lower than the pre-forging interface 100 along the projection 57a, and a second dome portion 200c curving farther downward in a downwardly convex shape in the center. The pre-forging flat interface 100 deforms into the post-forging interface 200. That is to say, since the area of the interface 100 is enlarged by the forging, not only the alloy layer 50 for the skirt portion but also the alloy layer 51 for the head portion extend largely on the interface. In this portion where the elongation is large, a large force is also exerted and oxide films are destroyed by forging. Also, if there is a difference in the elongation between both alloy layers 50 and 51, a relative slip occurs between both alloy layers 50 and 51 as well as the enlargement in the interface area, and this also contributes to destroy the oxide films. Once the oxide films are destroyed, the alloy layer 50 for the skirt portion comes into direct contact with the alloy layer 51 for the head portion. That is to say, the oxide films are destroyed as the interface area is enlarged (elongated) and the relative slip occurs in the first and second dome portions 200b and 200c, and both alloy layers are joined together to provide sufficient joining strength. The joining makes the interface 200 a joining interface after forging.

FIG. 5(C) corresponds to the process (N) of FIG. 4 in which various kinds of machining are carried out to for the piston. The projection 42 is machined off because the projection is not necessary after the hot forging. Piston ring grooves 65 are formed. Here, the fiber flow formed in the process shown in FIG 5(B) remains. By the way, the position of the projection 42 is not limited in the center of the head portion 40. The shape of the projection 42 is not necessarily of an approximate truncated cone. Furthermore, two or more projections 42 may be provided.

That is to say, when the interface is formed with the first dome 200b and the second dome 200c, joining area is increased. The joining area may also be increased with a plural number of second domes 200c formed to correspond to the plural number of projections 42 to firmly join the alloy layer 51 for the head portion to the alloy layer 50 for the skirt portion.

By the way, in addition to or in place of the extruded projection, a recess may be formed on the top surface of the piston head. When such a recess is formed by forging, fiber flows are caused in the same manner as in the case of the projection described above to increase the joining strength.

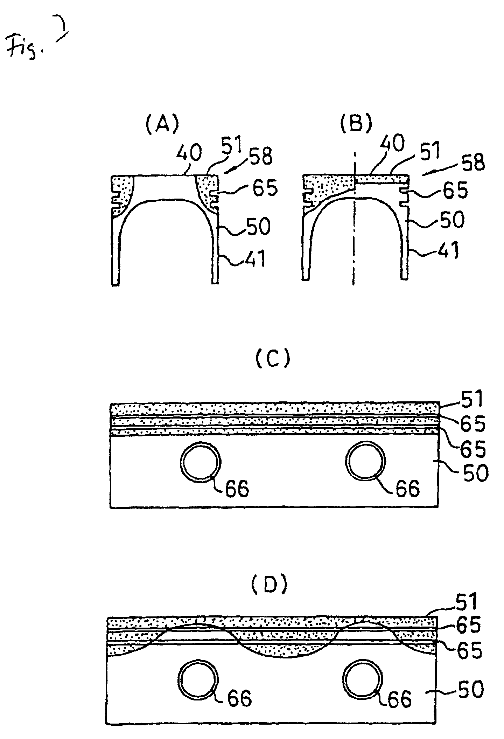

An explanatory FIG. 6 shows examples of locations and shapes of the extruded projections described above. FIG. 6(A) shows an example in which a circularly extruded projection 42 is located in the center of the piston 58. The broken lines in the drawing show the positions of two main scavenging ports 60, 61, a sub-scavenging port 62, and an exhaust port 63 of a two-cycle engine. FIG. 6(B) shows an example in which the extruded projection 42 is displaced from the center of the piston 58 toward the exhaust port 63 to increase the strength on the exhaust side where temperature is high. By the way, such a circularly extruded projection may be provided at a plural number of locations. FIG. 6(C) shows an example in which a circularly extruded projection 42 is disposed in the center and an annular projection 42' is disposed around the projection 42. FIG. 6(D) shows an example in which a curved, deformed, extruded projection 42" is disposed with a displacement from the center. FIG. 6(E) shows an example in which an annular projection 42' only is provided. Here, a large number of stripes are radially formed around the extruded projections 42, 42', 42". These stripes represent fiber flows 64 radially extending from the extruded projections. As described before, these stripes are formed along the directions in which the textures move according to the slip of the alloy layers when they are forged and run generally at right angles to the contour of the extruded projection. As described before, the fiber flows are also formed on the interface between different materials. In other words, that the fiber flows are formed in at least one of the alloy layer 50 for the skirt portion and the alloy layer 51 for the head portion in the vicinity of the interface means that the elongation on the interface is large. Therefore, oxide films are destroyed on the interface, and the alloy layer 50 for the skirt portion and the alloy layer 51 for the head portion are firmly joined together by direct contact.

In the finished piston 58 of the embodiments described above, the entire head portion including the piston ring groove is made of quenched powder aluminium alloy and the entire skirt portion is made of the alloy consisting of aluminium, silicon, copper, and magnesium. However, the constitution is not limited to the above but only part of the head portion may be constituted with the quenched powder aluminium alloy.

FIG. 14(B) corresponds to the process (L) of FIG. 4. The forged piston 58 has a projection 42 pushed out in the center of the head portion 40 corresponding to the recess 59 formed in the center of the lower die 55. When the projection 42 is formed, the interface 100a between the two alloy layers is deformed to be an interface 100b having a larger area. The deformation accompanied by the increase in the interface area causes relative slip between the two alloy layers on the head and skirt portion sides to destroy and remove oxide films on the interface, and is effective in providing a sufficient joining strength. In other words, if the central portion of the interface remains flat, the relative slip is less likely to occur and sufficient joining strength is not provided. Therefore, the projection 42 is formed in the head center to cause relative slip by moving the forged materials up and down and to provide sufficient joining strength. Here, fiber flows are caused to occur along the movement of the material textures at the time of forging in the vicinity of the projection 42 of the head portion 40 and a portion, corresponding to the projection 42, of the joining interface between the head and skirt portions. The fiber flows are caused by the relative slip between the two alloy layers of the head and skirt portions at the time of forging. The relative slip destroys the oxide films on the interface to provide sufficient joining strength. Here, when the projection 42 is machined off to make the piston in the final product shape, a fiber flow vertical to the top surface of the head portion 40 remains in the center surrounded with radial fiber flow lines.

FIG. 13(C) corresponds to the process (N) of FIG. 4 in which various kinds of machining are carried out to for the piston. The projection 42 is machined off because the projection is not necessary after the hot forging. Piston ring grooves 65 are formed. Here, the fiber flow formed in the process shown in FIG 5(B) remains. By the way, the position of the projection 42 is not limited in the center of the head portion 40. The shape of the projection 42 is not necessarily of an approximate truncated cone. Furthermore, two or more projections 42 may be provided.

According to the above embodiment, the finished piston 58 consists of the head portion entirely consisting of quenched powder aluminium alloy and the skirt portion entirely consisting of the alloy comprising aluminium, silicon, copper, and magnesium. However, the composition is not limited to the above but only part of the head portion may be made of quenched powder aluminium alloy.

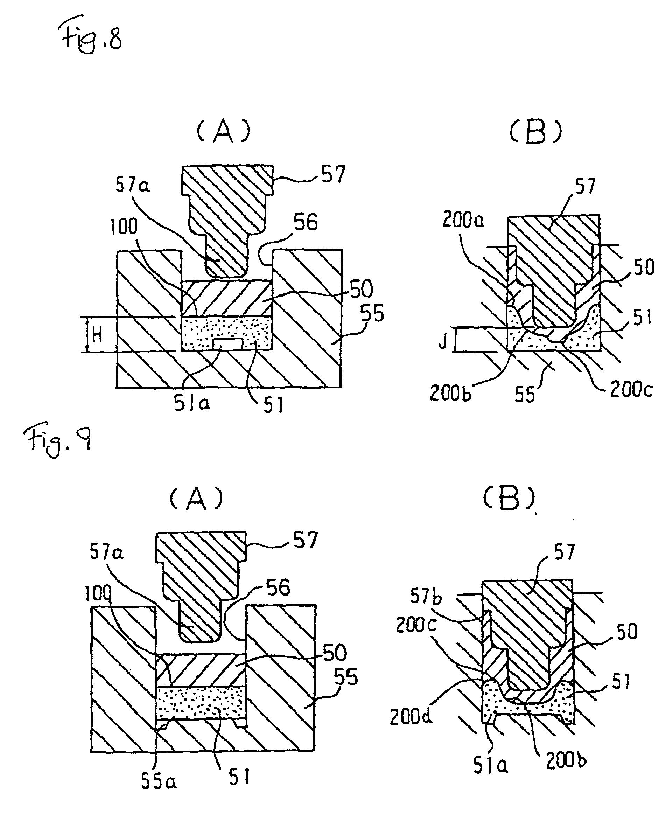

FIG.7 is an explanatory drawing to show another composition distribution of quenched powder aluminium alloy for the piston head portion.

FIG. 7(A) shows an example in which only the peripheral portion around the piston ring groove 65 of the head portion 40 is formed,with the quenched powder aluminium alloy (PM alloy). According to the example, the peripheral portion of the head portion 40 where heat resistance is specially required is formed with the PM alloy having good heat resistance while other portions are formed with piston alloy having good forming property. As a result, ease of forge-forming is improved. At the same time, because of the curved joining surface, relative slip occurs easily and the joining strength is improved. As a result, like the embodiment described above, the top land above the piston ring groove 65 may be made thinner. The thinner top land reduces the crevice volume and also the amount of unburned gas. and is effective as a measure for reducing exhaust emissions. Furthermore in particular, the edge portion of the top land stands a temperature of about 350 degrees C without yield or deformation. FIG.7(C) is a peripherally extended view of the piston shown in FIG. 7(A). In this case, the quenched powder aluminium alloy layer 51 is formed in a uniform thickness over the periphery of the piston.

FIG.7(B) shows an example in which the quenched powder aluminium alloy layer 51 is made thicker on the intake and exhaust sides while thinner on the piston pin boss sides. FIG. 7(D) is a peripherally extended view of the piston of (B). In this case, the thickness of the quenched powder aluminium alloy layer 51 is varied over the periphery so that its underside is generally wavy: at positions above the piston pin bosses 66, the thickness is reduced so that its underside is above the piston ring groove 65, while at positions above and between the piston pin bosses, the thickness is increased so that its underside is below the piston ring groove 65.

As described above, the alloy layer 50 for the skirt portion and the alloy layer 51 for the head portion are firmly joined together through direct contact by arranging that the interface surface area is enlarged and the oxide films are destroyed after forging. After forging, fiber flows are formed along the elongation in the vicinity of the contact interface so as to increase strength against external forces working in the direction of bonding the fiber flows. That, is to say, when the piston is used in an actual engine and subjected to the gas pressure exerted on the head portion, the fiber flows radially extending toward the periphery support the pressure and transmit it to the piston pin bosses and protect the head portion. There are farther the following methods for enlarging the pre-forging contact interface area between the alloy layer 50 for the skirt portion and the alloy layer 51 for the head portion.

FIG. 8 is a cross-sectional view to show another method of manufacturing the piston of the invention. Description of those symbols in FIG. 8 which are also used in FIG. 5 in common is omitted. On the underside of the alloy layer 51 for the head portion before forging is formed with a recess 51a. The projection 57a is moved down into the alloy layer 50 for the skirt portion until the recess 51a comes into contact with the lower die 55. This brings about the state shown in FIG. 8 (B) in which the central portion of the pre-forging interface 100 is deformed by forging to form the post-forging interface 200c. Other portions 200a, 200b of the post-forging interface are formed as described in reference to FIG. 5. That is to say, fiber flows are formed in both alloy layers 50 and 51 in the vicinity of the interface 200 and both alloy layers are firmly joined together. According to this manufacturing method, the piston material before being processed has no extruded projection shown in FIG. 5 and so the processing is simple. If a pre-forging alloy layer 51 for the head portion is to be formed by sintering or the like, the recess 51a may be easily formed.

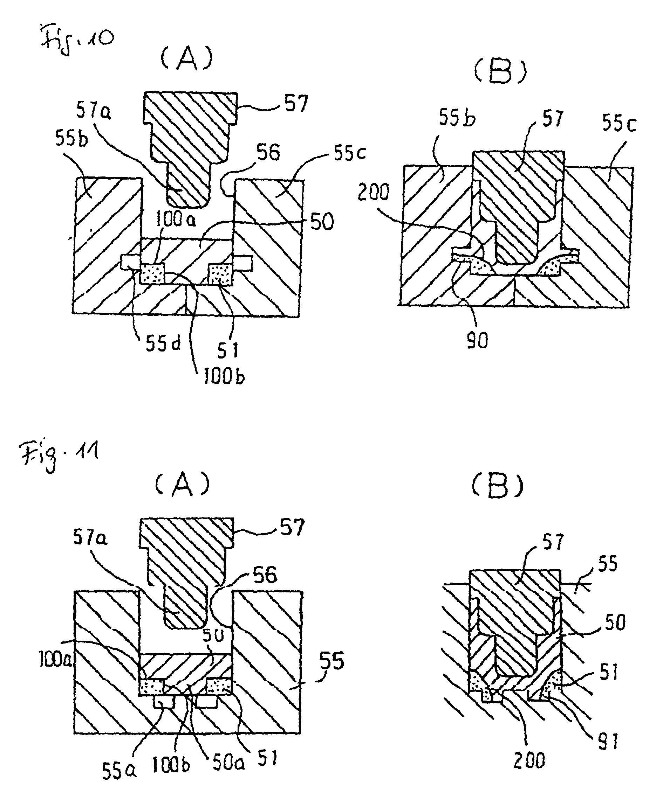

FIG. 9 is a cross-sectional view to show still another method of manufacturing the piston of the invention. According to the method, the alloy layer 50 for the skirt portion and the alloy layer 51 for the head portion are firmly joined to the periphery of the piston.

Description of those symbols in FIG. 9 which are also used in FIG. 5 in common is omitted. An annular recess 55a is formed on the bottom surface circumference of the recess 56 in the lower die 55. As the punch 57 is lowered, the periphery of the alloy layer 50 for the skirt portion rises. Along wit the rise, the periphery of the interface 100 also rises. As the punch 57 is lowered farther, the rise of the periphery of the alloy layer 50 for the skirt portion is restricted or rather pushed back with the periphery 57b of the punch 57. The periphery of the alloy layer 51 for the head portion is pushed down through the alloy layer 50 for the skirt portion with the periphery 57b and forced into the recess 56. Here, the interface periphery which has once risen lowers as shown in FIG. 9(B) to form a cone-like portion 200d. Since the interface periphery area also increases with forging, both alloy layers 50 and 51 are firmly joined together also on the cone-like portion 200d. Fiber flows are also formed in the alloy layers 50 and 51 in the vicinity of the interface 200. By the way, the extruded projection 51a is removed by a post-forging process.

FIG. 10 is a cross-sectional view to show still another method of manufacturing the piston of the invention. This method is applicable to the piston 40 shown in FIG. 7 so that the alloy layer 50 for the skirt portion and the alloy layer 51 for the head portion are firmly joined to the periphery of the piston. Description of those symbols in FIG. 10 which are also used in FIG. 7(a) in common is omitted.

The lower die 55 comprises a left die 55b and a right die 55c, respectively separable to left and right. A pre-forging alloy piece 51 for the head portion is of a hollow cylindrical shape. A projection 50a of the alloy piece 50 for the skirt portion fits into the hollow portion. Both alloy pieces come into contact with each other to form a planar interface 100a and a cylindrical interface 100b. A donut-shaped recess 55d is provided in the lower die 55 in the vicinity of the interface 100a. As shown in FIG. 10(B), both alloy materials 50 and 51 are squeezed out, and forced into the recess 55d to form a flange-like projection 90. The post-forging interface 200 enters the projection 90. That is to say, it is possible to make the area of the interface 200 larger than the sum of the pre-forging areas of the interfaces 100a and 100b. Also, fiber flows are formed in both alloy materials 50 and 51 in the vicinity of the interface 200. The projection 90 is removed by a post-forging process.

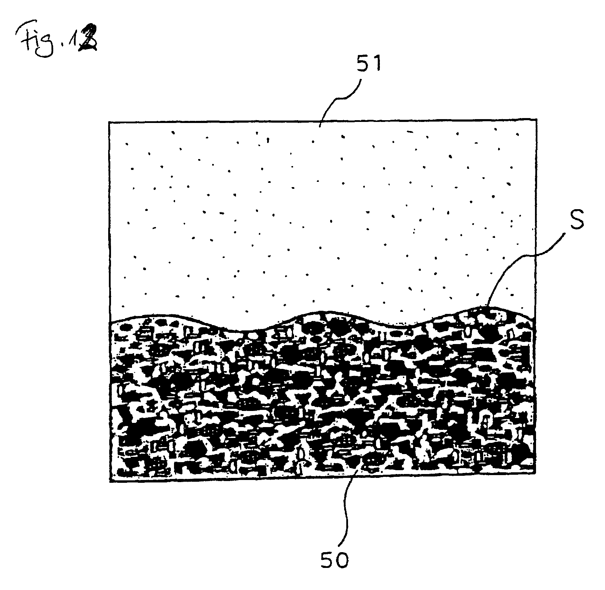

FIG. 11 is a cross-sectional view to show still another method of manufacturing the piston of the invention. This method is applicable to the piston 40 shown in FIG. 7 so that the alloy layer 50 for the skirt portion and the alloy layer 51 for the head portion are firmly joined to the periphery of the piston. Description of those symbols in FIG. 11 which are also used in FlGs. 5 and 10(a) in common is omitted.

A donut-shaped recess 55a is formed in the peripheral portion of the bottom of the recess 56 of the lower die 55. As shown in FIG. 11(B), both alloy materials 50 and 51 are squeezed out by forging and forced into the recess 55a to form a projection 91. The post-forging interface 200 enters the projection 91. That is to say, it is possible to make the area of the interface 200 larger than the sum of the pre-forging areas of the interfaces 100a and 100b. Also, fiber flows are formed in both alloy materials 50 and 51 in the vicinity of the interface 200. The projection 91 is removed by a post-forging process.

FIG. 12 is a view of interface texture drawn in reference to a microscopic photograph of the joining interface of the piston of the invention. As described above, when both alloy layers are joined together by forging, relative slip occurs on the interface between both alloy layers, surface films on both alloy layers are broken, textures of both alloy layers go into each other, and firmly joined together. In this case as shown in the drawing, both alloy layers 50 and 51 are wavy on the interface S and extended into each other so that both textures are joined together. The wavy texture interface S formed on the joining interface in the piston by forge-joining of different materials according to the invention is formed by the elongation as well as relative slip when the different materials are press-joined with each other, and is confirmed by microscopic observation of the interface texture.

The piston 58 of the above embodiment may be effectively used in engines operated at high speeds with high output in such vehicles as automobiles, motorcycles, snowmobiles, outboard motors, etc.

The composition of the alloys that can be used for the head portion and the skirt portion are as follows:

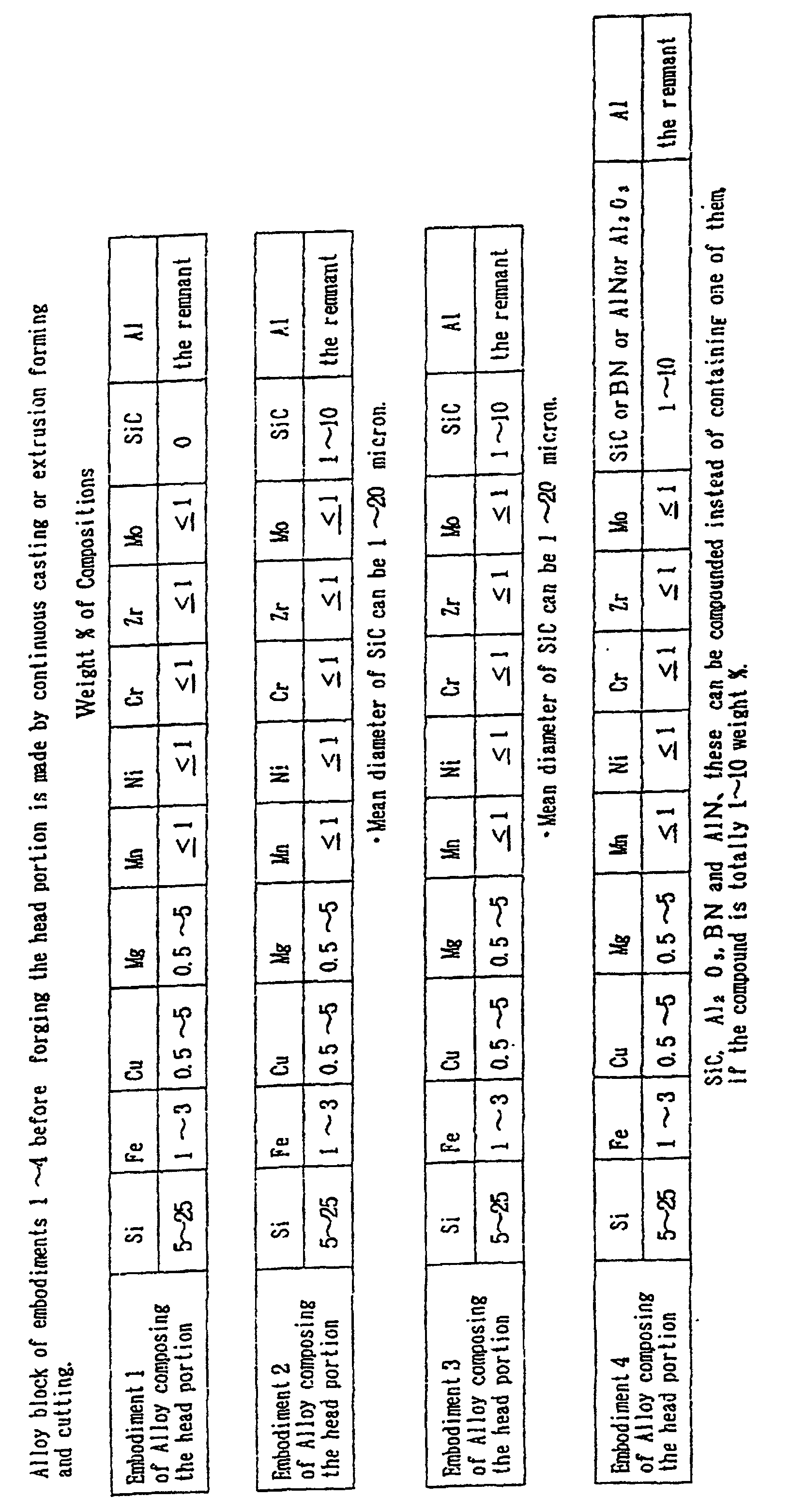

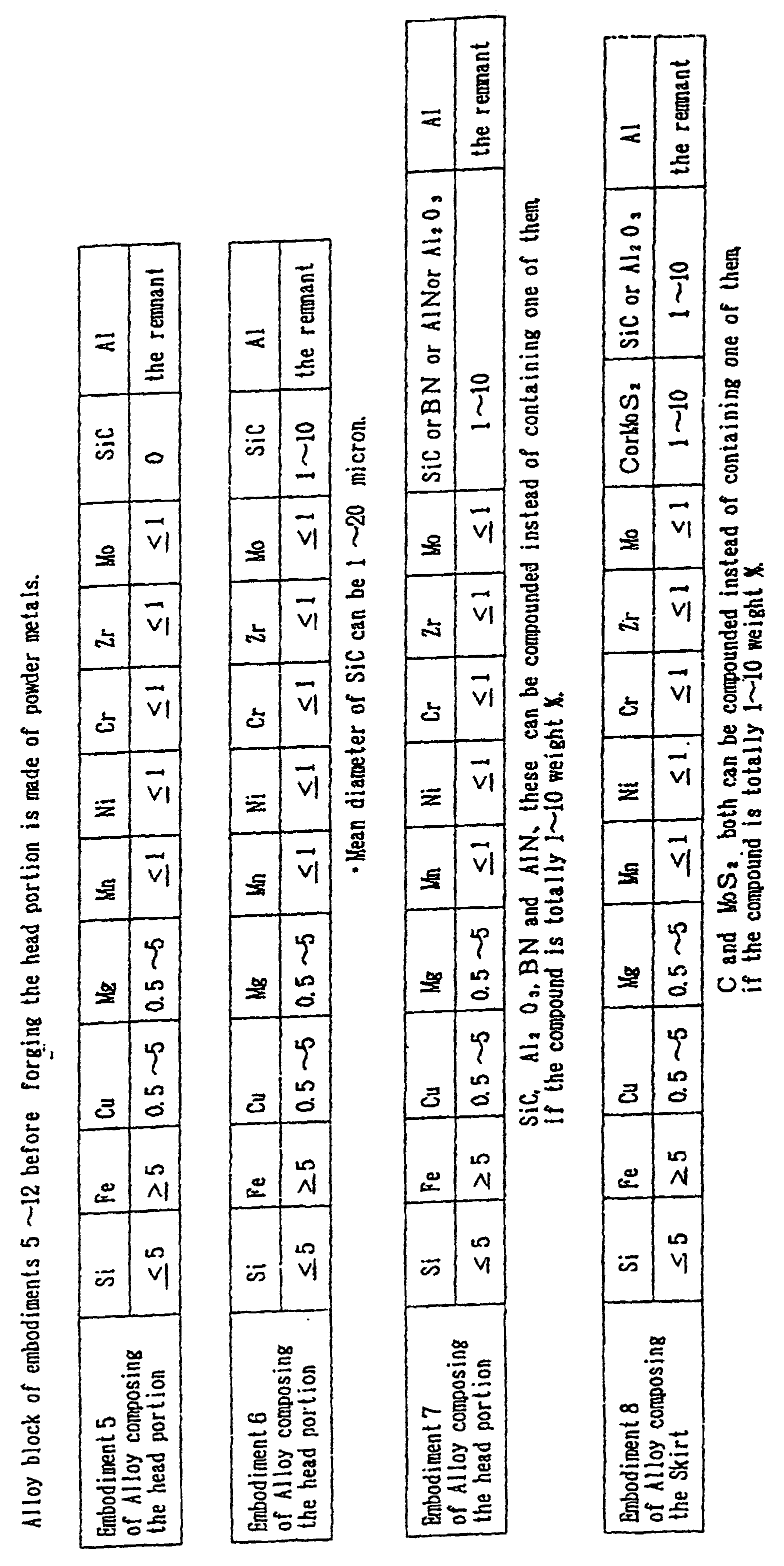

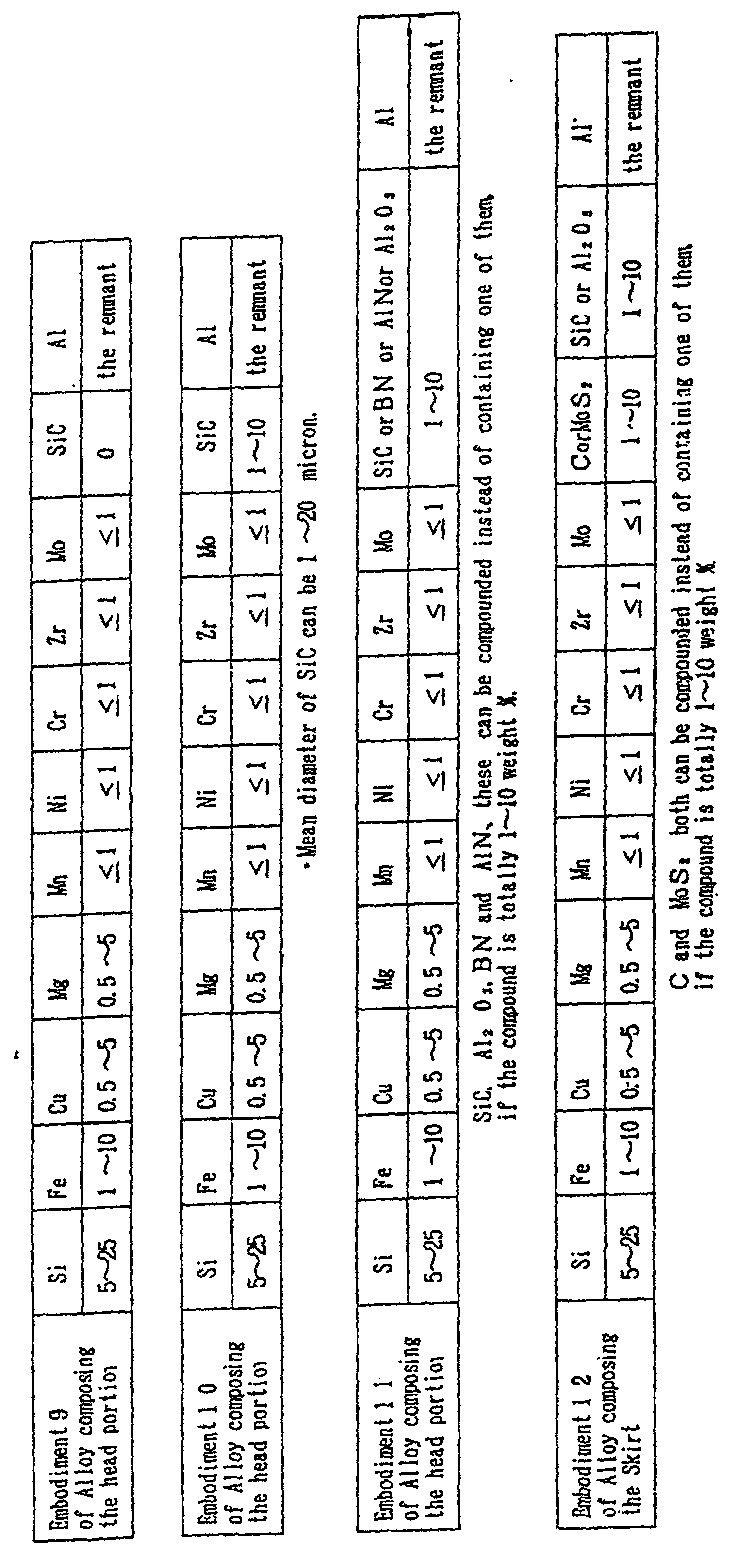

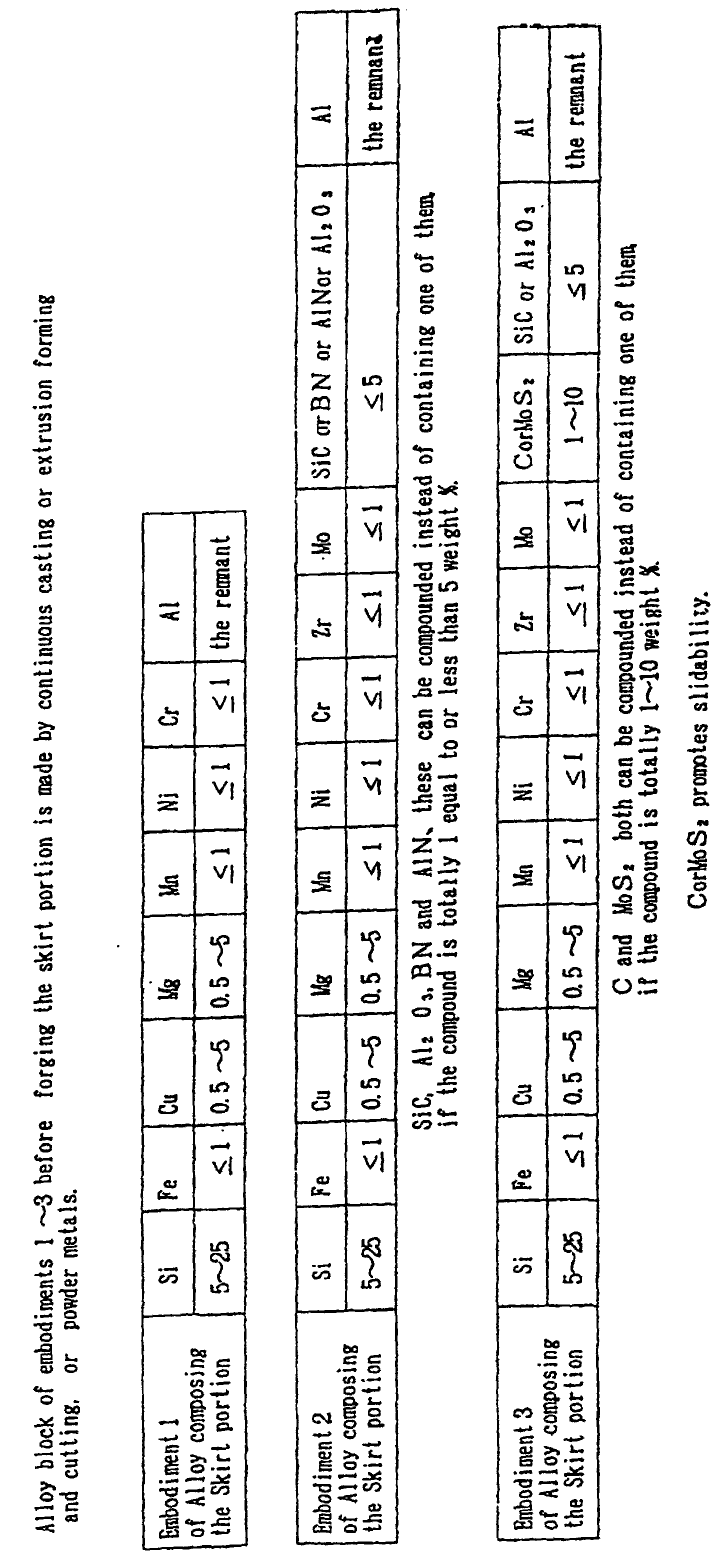

In addition, the following specific alloys have been found advantageous for use as the alloy forming at least a portion of the skirt of the piston 20. These alloy embodiments are preferably manufactured by continuous casting or extrusion forming and then cut into the desired block, and may also be formed from powder metals, as described in more detail below.
(1) Al containing the following alloying elements by percentage weight: between 5-25 Si; 1 or less than 1 Fe (iron); between 0.5-5 Cu (copper); between 0.5-5 Mg (magnesium); 1 or less than 1 Mn (manganese); 1 or less than 1 Ni (nickel); and 1 or less than 1 Cr (chromium);
(2) Al containing the following alloying elements by percentage weight: between 5-25 Si; 1 or less than 1 Fe; between 0.5-5 Cu; between 0.5-5 Mg; 1 or less than 1 Mn; 1 or less than 1 Ni; 1 or less than 1 Cr; 1 or less than 1 Zr (zirconium); 1 or less than 1 Mo (molybdenum); and 5 or less than 5 SiC (silicon carbide) or BN (boron nitride) or AlN (aluminum nitride) or Al₂O₃ (aluminum oxide), where the SiC, BN, AlN and Al₂O₃ can be combined instead of using only one of them, as long as the total weight of the combination is within the desired range; and
(3) Al containing the following alloying elements by percentage weight: between 5-25 Si; 1 or less than 1 Fe; between 0.5-5 Cu; between 0.5-5 Mg; 1 or less than 1 Mn; 1 or less than 1 Ni; 1 or less than 1 Cr; 1 or less than 1 Zr; 1 or less than 1 Mo; between 1 and 10 C (carbon) or MoS₂(molybdenum disulfide); and 5 or less than 5 SiC or Al₂O₃, where the C and MoS₂ may be combined instead of using just one of them, as long as the combined weight is within the desired range.

The following specific alloys have been found advantageous for use as the alloy forming at least a portion of the head of the piston 20.

Specific alloys contents which have been found suitable are as follows. These first three alloy embodiments are preferably manufactured by continuous casting or extrusion forming and then cut into the desired block.
(1) Al containing the following alloying elements by percentage weight: between 5-25 Si; between 1-3 Fe; between 0.5-5 Cu; between 0.5-5 Mg; 1 or less than 1 Mn; 1 or less than 1 Cr; 1 or less than one Zr; 1 or less than 1 Mo; and approximately 0 SiC;
(2) Al containing the following alloying elements by percentage weight: between 5-25 Si; between 1-3 Fe; between 0.5-5 Cu; between 0.5-5 Mg; 1 or less than 1 Mn; 1 or less than 1 Ni; 1 or less than 1 Cr; 1 or less than 1 Zr; 1 or less than 1 Mo; and between 1-10 SiC (the mean diameter of the SiC being between about 1 and 20 microns);
(3) Al containing the following alloying elements by percentage weight: between 5-25 Si; between 1-3 Fe; between 0.5-5 Cu; between 0.5-5 Mg; 1 or less than 1 Mn; 1 or less than 1 Ni; 1 or less than 1 Cr; 1 or less than 1 Zr; 1 or less than 1 Mo; and between 1-10 SiC, BN, AlN or Al₂O₃, where the SiC, Al2O3, BN and AIN can be compounded instead of containing one of them if the compound weight totals within the 1-10% range.

The following alloys are preferably made from powder metals:
(4) Al containing the following alloying elements by percentage weight: 5 or less than 5 Si; 5 or greater than 5 Fe; between 0.5-5 Cu; between 0.5-5 Mg; 1 or less than 1 Mn; 1 or less than 1 Ni; 1 or less than 1 Cr; 1 or less than 1 Zr; 1 or less than 1 Mo; and approximately 0 SiC;
(5) Al containing the following alloying elements by percentage weight: 5 or less than 5 Si; 5 or greater than 5 Fe; between 0.5-5 Cu; between 0.5-5 Mg; 1 or less than 1 Mn; 1 or less than 1 Ni; 1 or less than 1 Cr; 1 or less than 1 Zr; 1 or less than 1 Mo; and between 1-10 SiC (having a mean diameter of about 1-20 microns);
(6) Al containing the following alloying elements by percentage weight: 5 or less than 5 Si; 5 or more than 5 Fe; between 0.5-5 Cu; between 0.5-5 Mg; 1 or less than 1 Mn; 1 or less than 1 Ni; 1 or less than 1 Cr; 1 or less than 1 Zr; 1 or less than 1 Mo; and between 1-10 SiC, BN, AlN or Al₂O₃, where the SiC, Al₂O₃, BN and AlN can be combined instead of containing only one of them if the compound weight totals within the 1-10% range.
(7) Al containing the following alloying elements by percentage weight: 5 or less than 5 Si; 5 or more than 5 Fe; between 0.5-5 Cu; between 0.5-5 Mg; 1 or less than 1 Mn; 1 or less than 1 Ni; 1 or less than 1 Cr; 1 or less than 1 Zr; 1 or less than 1 Mo; between 1-10 C or MoS₂; and between 1-10 SiC or Al₂O₃, where the C and MoS, can be combined instead of containing one of them if the combined weight totals within the 1-10% range;
(8) Al containing the following alloying elements by percentage weight: between 5-25 Si; between 1-10 Fe; between 0.5-5 Cu; between 0.5-5 Mg; 1 or less than 1 Mn; 1 or less than 1 Ni; 1 or less than 1 Cr; 1 or less than 1 Zr; 1 or less than 1 Mo; and approximately 0 SiC;
(9) Al containing the following alloying elements by percentage weight: between 5-25 Si; between 1-10 Fe; between 5-5 Cu; between 0.5-5 Mg; 1 or less than 1 Mn; 1 or less than 1 Ni; 1 or less than 1 Cr; 1 or less than 1 Zr; 1 or less than 1 Mo; and between 1-10 SiC (with a mean diameter of between about 1-20 microns);
(10) Al containing the following alloying elements by percentage weight: between 5-25 Si; between 1-10 Fe; between 0.5-5 Cu; between 0.5-5 Mg; 1 or less than 1 Mn; 1 or less than 1 Ni; 1 or less than 1 Cr; 1 or less than 1 Zr; 1 or less than 1 Mo; and between 1-10 SiC, BN, AlN or Al₂O₃, where the SiC, Al₂O₃, BN and AlN can be combined instead of containing only one of them if the combined weight totals within the 1-10% range; and
(11) Al containing the following alloying elements by percentage weight: between 5-25 Si; between 1-10 Fe; between 0.5-5 Cu; between 0.5-5 Mg; 1 or less than 1 Mn; 1 or less than 1 Ni; 1 or less than 1 Cr; 1 or less than 1 Zr; 1 or less than 1 Mo; between 1-10 C or MoS₂; and between 1-10 SiC or Al₂O₃, where the C and MoS₂ can be combined instead of containing one of them if the combined weight totals within the 1-10% range,

## Claims

1. Method of making a piston (58) for an internal combustion engine, said piston (58) comprising a head portion (40) exposed to a combustion chamber and a skirt portion (41) sliding within a cylinder, comprising the method steps of:
obtaining a first block of a first alloy comprising Al for forming said head portion (40);
obtaining a second block of a second alloy comprising Al for forming the skirt portion (41);
stacking said second block upon said first block so that said blocks abut along a first interface having a first area;
forge-pressing said first and said second block together into a piston to form at least one projection (200b, 200c, 200f) at a joining interface (100, 200) between said first and said second block for forming an interface having a second area which is larger than said first area **characterised in that** thereby is also produced at least one other projection (42, 51 a, 90, 91) at an outside surface of said piston (58).

2. Method according to claim 1, wherein said first and second blocks are stacked within a main recess of a lower die, and further comprising the step of pressing a top die into said main recess of said lower die and against said blocks.

3. Method according to claim 2, wherein said lower die has a sub-recess extending from said main recess, and further including the step of deforming said first and/or second alloy into said sub-recess to form a projection from said piston.

4. Method according to one of claims 1 to 3, further comprising the step of forming said first block from an ingot of said first alloy by melting said ingot, quench-solidifying said melted alloy into power, heat extruding said powder into an extrusion, and cutting said extrusion into blocks of said second alloy.

5. Method according to one of claims 1 to 4, further comprising the step of machining at least one ring groove into said piston.

6. Method according to one of claims 1 to 5, further comprising the step of heat-treating said piston after forging.

7. Method according to claim 1 comprising the steps of :
obtaining a solidified piece of said first alloy;
obtaining a solidified piece of said second alloy; and
press-forging said pieces of first and second alloys together into a form of a piston, said step of press-gorging further comprising the step of moving a surface of said first alloy relative to a joining surface of said second alloy.

8. Method according to claim 7, wherein said pieces of said first and second alloy are stacked and abut along an interface having a first area, and during forging said first and second alloys are joined along an interface having a second area which is greater than said first area.

9. Method according to claim 7 or 8, wherein during said press-forging a grain structure of said first alloy and a grain structure of said second alloy in at least that area where said first and second alloys are joined are elongated in at least one direction.

10. Method as defined in any of the preceding claims, further comprising the step of removing said at least one other projection (42, 50a, 90, 91).

## Patentansprüche

1. Verfahren zum Herstellen eines Kolbens (58) für einen Verbrennungsmotor, wobei der Kolben (58) einen Kopfabschnitt (40), der zu einer Brennkammer hin frei liegt, sowie einen Hemdabschnitt (41) umfasst, der in einem Zylinder gleitet, wobei es die folgenden Verfahrensschritte umfasst:
Herstellen eines ersten Blocks aus einer ersten Legierung, die Al umfasst, zum Ausbilden des Kopfabschnitts (40);
Herstellen eines zweiten Blocks aus einer zweiten Legierung, die Al umfasst, zum Ausbilden des Hemdabschnitts (41);
Aufsetzen des zweiten Blocks auf den ersten Block, so dass die Blöcke an einer ersten Grenzfläche aneinander stoßen, die eine erste Fläche hat;
Druckschmieden des ersten und des zweiten Blocks zu einem Kolben, um wenigstens einen Vorsprung (200b, 200c, 200f) an einer Verbindungs-Grenzfläche (100, 200) zwischen dem ersten und dem zweiten Block auszubilden und eine Grenzfläche auszubilden, die eine zweite Fläche hat, die größer ist als die erste Fläche, **dadurch gekennzeichnet, dass** damit auch wenigstens ein anderer Vorsprung (42, 51a, 90, 91) an einer Außenfläche des Kolbens (58) hergestellt wird.

2. Verfahren nach Anspruch 1, wobei der erste und der zweite Block in einer Hauptvertiefung eines unteren Werkzeugs aufeinandergesetzt werden, und das des Weiteren den Schritt des Pressens eines oberen Werkzeugs in die Hauptvertiefung des unteren Werkzeugs und an die Blöcke umfasst.

3. Verfahren nach Anspruch 2, wobei das untere Werkzeug eine Teilvertiefung aufweist, die sich von der Hauptvertiefung aus erstreckt, und das des Weiteren den Schritt des Verformens der ersten und/oder der zweiten Legierung in die Hauptvertiefung hinein zum Ausbilden eines Vorsprungs von dem Kolben einschließt.

4. Verfahren nach einem der Ansprüche 1 bis 3, das des Weiteren den Schritt des Ausbildens des ersten Blocks aus einem Barren der ersten Legierung durch Schmelzen des Barrens, Härtungsverfestigen der geschmolzenen Legierung zu Pulver, Warm-Strangpressen des Pulvers zu einem Strangpressteil und Schneiden des Strangpressteils in Blöcke einer zweiten Legierung umfasst.

5. Verfahren nach einem der Ansprüche 1 bis 4, das des Weiteren den Schritt des Spanens wenigstens einer Ringnut in den Kolben umfasst.

6. Verfahren nach einem der Ansprüche 1 bis 5, das des Weiteren den Schritt des Wärmebehandelns des Kolbens nach dem Schmieden umfasst.

7. Verfahren nach Anspruch 1, das die folgenden Schritte umfasst:
Gewinnen eines verfestigten Teils der ersten Legierung;
Gewinnen eines verfestigten Teils der zweiten Legierung; und
Druckschmieden der Teile der ersten und der zweiten Legierung in eine Kolbenform, wobei der Schritt des Druckschmiedens des Weiteren den Schritt des Bewegens einer Fläche der ersten Legierung relativ zu einer Verbindungsfläche der zweiten Legierung umfasst.

8. Verfahren nach Anspruch 7, wobei die Teile der ersten und der zweiten Legierung aufeinandergesetzt werden und an einer Grenzfläche aneinander stoßen, die eine erste Fläche hat, und beim Schmieden die erste sowie die zweite Legierung entlang einer Grenzfläche verbunden werden, die eine zweite Fläche hat, die größer ist als die erste Fläche.

9. Verfahren nach Anspruch 7 oder 8, wobei während des Druckschmiedens eine Kornstruktur der ersten Legierung und eine Kornstruktur der zweiten Legierung wenigstens in dem Bereich, indem die erste und die zweite Legierung verbunden werden, in wenigstens einer Richtung verlängert werden.

10. Verfahren nach einem der vorangehenden Ansprüche, das des Weiteren den Schritt des Entfernens des wenigstens einen anderen Vorsprungs (42, 50a, 90, 91) umfasst.

## Revendications

1. Procédé de fabrication d'un piston (58) pour un moteur à combustion interne, ledit piston (58) comprenant une portion de tête (40) exposée à une chambre de combustion et une portion de collerette (41) coulissant dans un vérin, comprenant les étapes de procédé consistant à:
obtenir un premier bloc en un premier alliage comprenant du Al pour former ladite portion de tête (40);
obtenir un second bloc en un second alliage comprenant du Al pour former la portion de collerette (41) ;
empiler ledit second bloc sur ledit premier bloc de sorte que lesdits blocs butent le long d'une première interface présentant une première zone;
forger sous pression lesdits premier et second blocs ensemble en un piston pour former au moins une saillie (200b, 200c, 200f) à une interface de jonction (100, 200) entre lesdits premier et second bloc pour former une interface présentant une seconde zone qui est plus grande que ladite première zone, **caractérisé en ce qu'**ainsi est également produit au moins une autre saillie (42, 51a, 90, 91) à une surface extérieure dudit piston (58).

2. Procédé selon la revendication 1, où lesdits premier et second blocs sont empilés dans un évidement principal d'une matrice inférieure, et comprenant en outre l'étape consistant à enfoncer une matrice supérieure dans ledit évidement principal de ladite matrice inférieure et contre lesdits blocs.

3. Procédé selon la revendication 2, où ladite matrice inférieure présente un sous-évidement s'étendant à partir dudit évidement principal, et comprenant en outre l'étape consistant à déformer ledit premier et/ou second alliage dans ledit sous-évidement pour former une saillie dudit piston.

4. Procédé selon l'une des revendications 1 à 3, comprenant en outre l'étape consistant à former ledit premier bloc à partir d'un lingot dudit premier alliage en faisant fondre ledit lingot, à rendre solide par un refroidissement brusque ledit alliage fondu en poudre, à extruder à chaud ladite poudre en une extrusion et à couper ladite extrusion en des blocs dudit second alliage.

5. Procédé selon l'une des revendications 1 à 4, comprenant en outre l'étape consistant à usiner au moins une rainure annulaire dans ledit piston.

6. Procédé selon l'une des revendications 1 à 5, comprenant en outre l'étape consistant à traiter à chaud ledit piston après le forgeage.

7. Procédé selon la revendication 1 comprenant les étapes consistant à:
obtenir une pièce solidifiée à partir dudit premier alliage;
obtenir une pièce solidifiée à partir dudit second alliage; et
forger sous pression lesdites pièces des premier et second alliages ensemble en une forme de piston, ladite étape de forgeage sous pression comprenant en outre l'étape consistant à déplacer une surface dudit premier alliage relativement à une surface de jonction dudit second alliage.

8. Procédé selon la revendication 7, où lesdites pièces desdits premier et second alliages sont empilées et butent le long d'une interface présentant une première zone, et pendant le forgeage, lesdits premier et second alliages sont reliés le long d'une interface présentant une seconde zone qui est plus grande que ladite première zone.

9. Procédé selon la revendication 7 ou 8, où pendant ledit forgeage sous pression, une structure de grain dudit premier alliage et une structure de grain dudit second alliage dans au moins la zone dans laquelle lesdits premier et second alliages sont reliés, sont oblongues dans au moins une direction.

10. Procédé selon l'une des revendications précédentes, comprenant en outre l'étape consistant à supprimer au moins une autre saillie précitée (42, 50a, 90, 91)
